Europäisches Patentamt

European Patent Office

Office européen des brevets

(11) Veröffentlichungsnummer: **0 134 393**
**B1**

(12) **EUROPÄISCHE PATENTSCHRIFT**

(45) Veröffentlichungstag der Patentschrift: **11.07.90**

(21) Anmeldenummer: **84103674.2**

(22) Anmeldetag: **04.04.84**

(51) Int. Cl.⁵: **C 02 F 1/28, C 02 F 1/40,**
**C 02 F 1/52, B 01 D 17/02**

(54) **Verfahren zur Abscheidung von Kohlenwasserstoffen aus Wasser, insbesondere Grundwasser.**

(30) Priorität: **07.07.83 DE 3324425**

(43) Veröffentlichungstag der Anmeldung:
**20.03.85 Patentblatt 85/12**

(45) Bekanntmachung des Hinweises auf die
Patenterteilung:
**11.07.90 Patentblatt 90/28**

(84) Benannte Vertragsstaaten:
**AT BE CH FR GB IT LI NL SE**

(56) Entgegenhaltungen:
**DE-A-1 517 628**
**DE-A-1 517 730**
**FR-A-1 457 772**
**FR-A-2 236 793**
**FR-A-2 252 301**

(73) Patentinhaber: **Ralf F. Piepho Abwassertechnik**
**GmbH**
**Rittergut 2**
**D-3015 Wennigsen 5 (DE)**

(72) Erfinder: **Piepho, Ralf F.**
**Rittergut 2**
**D-3015 Wennigsen 5 (DE)**

(74) Vertreter: **Rücker, Wolfgang, Dipl.-Chem.**
**Hubertusstrasse 2**
**D-3000 Hannover 1 (DE)**

Courier Press, Leamington Spa, England.

**Beschreibung**

Die Erfindung bezieht sich auf ein Verfahren zur Abscheidung von Kohlenwasserstoffen, insbesondere chlorierten Kohlenwasserstoffen aus Wasser, insbesondere aus dem Grundwasser, das zur Trinkwassergewinnung dient.

In Industriegebieten, insbesondere in Gebieten der chemischen Industrie, ist die Ansammlung von chemisch-organischen Verbindungen im Grundwasser oft anzutreffen. Dies ist meistens darauf zurückzuführen, daß durch Schäden oder durch Defekte an den entsprechenden Anlagen organische Verbindungen, wie chlorierte Kohlenwasserstoffe aliphatischer und aromatischer Art, in das Grundwasser gelangen.

Andererseits gelangen oft solche organischen Verbindungen auch dort in das Grundwasser, wo sie in großen Mengen verarbeitet oder verbraucht werden, beispielsweise in Betankungsanlagen, wie beispielsweise auf Flugplätzen oder in Raffinerien.

Durch kleine Schadstellen im Rohrleitungsnetz, das unterirdisch verlegt ist, können im Laufe der Jahre gewaltige Mengen organischer Verbindungen in das Erdreich und damit in das Grundwasser gelangen.

Die Beseitigung solcher Verunreinigungen im Grundwasser ist mit außerordentlichen Schwierigkeiten verbunden, und es gibt an sich kein günstiges Verfahren, um dies zu bewerkstelligen. Flüchtige und stark riechende Stoffe dieser Art werden durch Ausdämpfen beseitigt. Dazu ist ein hoher Energieaufwand erforderlich und das Verfahren ist langwierig.

Zur Beseitigung oder zur Abtrennung feinster kolloider Schmutzstoffteilchen, die auch organische Substanzen enthalten können, koaguliert man diese Teilchen zu größeren Flocken, indem man dem Wasser oder dem Abwasser ein Flockungsmittel, beispielsweise Eisen-III-Salze, zusetzt. Die Entfernung von geringen Mengen chlorierter Kohlenwasserstoffe, beispielsweise Chloräthylen oder Trichloräthan aus Wasser ist damit aber nicht möglich. Speziell gilt dieses für die FR-A-2 236 793, in der vor allem mit Kieselgur organische Verunreinigungen mit größeren Teilchendurchmessern abgetrennt werden sollen.

Aufgabe der vorliegenden Erfindung ist es daher, ein Verfahren vorzuschlagen, mit dem die Abtrennung auch von kleineren Mengen chlorierter Kohlenwasserstoffe aus Wasser, insbesondere Grundwasser, in einfacher und wirkungsvoller Weise ermöglicht wird.

Gelöst wird diese Aufgabe nun dadurch, daß mit dem kohlenwasserstoffhaltigen Wasser eine geringe Menge Aktivkohle pro m$^3$ Wasser zwischen 50 g und 100 g Aktivkohle innig vermischt wird, und daß nach einer Verweilzeit zwischen 20 und 40 Minuten die Mischung mit einem Trennmittel vermischt wird, das wenigstens einen Elektrolyten ein Flockungsmittel und als weiteres Sorptionsmittel Bentonit und/oder aktivierten Bentonit mit oder ohne Kalk enthält und die sich darauf durch Koagulation bildende Ausflockung vom Wasser abgetrennt wird.

Weitere Merkmale des erfindungsgemäßen Verfahrens sind in den Unteransprüchen beschrieben.

Diese Ausflockung enthält Aktivkohle, an die die organischen Verbindungen gebunden sind.

Durch die Abtrennung der Aktivkohle mit den darin haftenden organischen Verbindungen vermittels des Trennmittels mit seinem Gehalt an Sorptionsmittel, das vorzugsweise Bentonit oder ein Gemisch aus Bentonit und aktiviertem Bentonit ist oder aus Bentonit, aktiviertem Bentonit und Kalk oder nur aus Bentonit besteht, ist die organische Verbindung nach der Abtrennung des Wassers deponierfähig gebunden. Sie ist durch Umwelteinflüsse nicht wieder auszuwaschen.

Andererseits kann die Ausflockung nach der Abtrennung des Wassers, wenn sie also schon relativ trocken ist, in einen luftdicht abschließbaren Mischer überführt werden und dort mit ungelöschtem, gebranntem Kalk vermischt werden. Durch die dabei entstehende exotherme Reaktion verdampfen die Kohlenwasserstoffe und können durch Kondensation an entsprechenden Einrichtungen wiedergewonnen werden. Dieses Verfahren ist relativ einfach und preiswert, erfordert keine großen apparativen Investitionen und gewährleistet mit Sicherheit eine Beseitigung der organischen Verbindungen sowohl aus dem Wasser als auch aus dem zu deponierenden Material.

Die Menge an Aktivkohle, die dem zu behandelnden Wasser, welches die Kohlenwasserstoffe enthält, zugesetzt ist, beträgt je nach Konzentration der Kohlenwasserstoffe 50 bis 100 g/ m$^3$ zu behandelnden Wassers. Die Verweilzeit für die Aktivkohle im Wasser bei heftiger Bewegung des Wassers und der Aktivkohle beträgt je nach Verunreinigungsgrad des Wassers 20 bis 40 Minuten. Diese Behandlung des zu reinigenden Wassers mit der Aktivkohle findet vorzugsweise in einem gesonderten Behälter mit Rührwerk statt, wobei das Rührwerk so ausgelegt ist, daß es eine heftige Turbulenz der Flüssigkeit zu erzeugen vermag.

Nach der oben genannten Verweilzeit wird das die Aktivkohle enthaltende Wasser vorzugsweise in ein anderes Gefäß, Vorrichtung oder Einrichtung überführt, wie sie zur Reinigung von ölhaltigen Emulsionen enthaltenden Abwässern allgemein bekannt und beispielsweise in der deutschen Offenlegungsschrift 31 24 738 beschrieben sind und dort mit einem sogenannten Trennmittel behandelt, das aus einem pulverförmigen Gemisch aus einem Flockungsmittel, beispielsweise einem Polyakrylamid, einem Elektrolyten, beispielsweise Eisensulfat oder Aluminiumsulfat und einem Sorptionsmittel in Form von Bentonit oder einem Gemisch aus Bentoniten unterschiedlicher Art und Kalk besteht, gegebenenfalls mit einem Zusatz an einem den pH-Wert beeinflussenden Mittel, beispielsweise Adipinsäure. Die Menge des zuzusetzenden Trennmittels richtet sich nach der Menge der zugesetzten Aktivkohle und liegt etwa bei 0,4 bis 1 kg/m³ des zu behandelnden Wassers.

Auch dieses Trennmittel wird unter Turbulenzen vermittels einer Mischturbine mit dem aktivkohlehaltigen Wasser innig vermischt. Alsbald nach der Vermischung entsteht eine Flockung im Wasser, in der die Aktivkohle mit den darauf haftenden Kohlenwasserstoffverbindungen enthalten ist. Die Flocke kann unter Verwendung an sich geeigneter Einrichtungen, beispielsweise Filter und Pressen, befreit werden und kann dann auch deponiert werden.

In Verfolg des Erfindungsgedankens ist es aber zweckmäßiger, die zum Teil entwässerte Ausflockung mit der darin verteilten Aktivkohle und den sorbierten Kohlenwasserstoffen in einem Mischer mit gebranntem Kalk zu vermischen. Durch die dabei entstehende exotherme Reaktion, die eine starke Erwärmung des Mischgutes zur Folge hat, werden die Kohlenwasserstoffe ausgetrieben und verdampfen und können an einer geeigneten Einrichtung kondensiert und somit wiedergewonnen werden.

Das erfindungsgemäße Verfahren ist außerordentlich kostengünstig und wirkungsvoll. Durch gaschromatographische, fluoreszenzspektroskopische und dünnschichtchromatographische Untersuchungen wurde festgestellt, daß Rohwasser mit folgenden chlorierten Kohlenwasserstoffen, wie Dichlormethan, Trichloräthan, Tetrachlorkohlenstoff, 1, 2-Dichloräthan, Chloroform, Trichloräthylen, 1, 2-Dichlorpropan, Perchloräthylen, 1, 1, 2-Trichloräthan, 1, 1, 1, 2-Tetrachloräthan und 1, 2, 3-Trichlorpropan durch das erfindungsgemäße Verfahren so behandelt werden kann, daß diese Kohlenwasserstoffe anschließend nicht mehr nachweisbar sind.

Statt das Sediment bzw. die Ausflockung mit gebranntem Kalk zu vermischen, kann zum Austreiben der chlorierten Kohlenwasserstoffe auch Abwärme verwendet werden.

Wasser im Sinne des Verfahrens, bzw. der Erfindung soll all umfassende Bedeutung haben, also Grundwasser, Trinkwasser, Flußwasser, Brauchwasser als auch Abwasser umfassen.

**Patentansprüche**

1. Verfahren zur Abscheidung von vorzugsweise chlorierten Kohlenwasserstoffen aus Wasser, insbesondere Grundwasser unter Verwendung von Aktivkohle und Sorptionsmitteln, dadurch gekennzeichnet, daß mit dem kohlenwasserstoffhaltigen Wasser pro m³ Wasser zwischen 50 g und 100 g Aktivkohle innig vermischt wird, und daß nach einer Verweilzeit zwischen 20 und 40 Minuten die Mischung mit einem Trennmittel vermischt wird, daß wenigstens einen Elektrolyten, ein Flockungsmittel und als weiteres Sorptionsmittel Bentonit und/oder aktivierten Bentonit mit oder ohne Kalk enthält und die sich darauf durch Koagulation bildende Ausflockung vom Wasser abgetrennt wird.

2. Verfahren nach Anspruch 1, dadurch gekennzeichnet, daß das Trennmittel als Elektrolyt Eisenbzw. Aluminiumsulfat enthält sowie ein Flockungsmittel, beispielsweise Polyacrylamid und das pro m³ zu behandelndes Wasser 0,4 bis 1,0 kg des Trennmittels zugesetzt werden.

3. Verfahren nach Anspruch 1 und 2, dadurch gekennzeichnet, daß die vom Wasser abgetrennte Ausflockung mit verringertem Wassergehalt mit gebranntem Kalk vermischt wird und die durch die exotherme Reaktion verdampfenden Kohlenwasserstoffe durch Kondensation wiedergewonnen werden.

4. Verfahren nach Anspruch 1 und 2, dadurch gekennzeichnet, daß das abgetrennte, im Wassergehalt verringerte Sediment mit Abwärme zum Austreiben der Kohlenwasserstoffe behandelt wird.

**Revendications**

1. Procédé pour séparer de l'eau, en particulier des eaux souterraines, des hydrocarbures de préférence chlorés, par utilisation de charbon actif et de sorbants, caractérisé en ce qu'on mélange intimement à l'eau contenant des hydrocarbures une faible quantité de charbon actif, comprise entre 50 et 100 g de charbon actif par mètre cube d'eau, et que, après un temps de séjour de 20 à 40 minutes, on ajoute au mélange un agent de séparation, lequel contient au moins un électrolyte, un floculant et, comme sorbant supplémentaire, de la bentonite et/ou de la bentonite activée, avec ou sans chaux, et que le floculat qui se forme alors par coagulation est séparé de l'eau.

2. Procédé selon la revendication 1, caractérisé en ce que l'agent de séparation contient comme électrolyte du sulfate de fer ou d'aluminium, de même qu'un floculant, par exemple le polyacrylamide, et que l'on ajoute, par m³ d'eau à traiter, 0,4 à 1,0 kg de l'agent de séparation.

3. Procédé selon les revendications 1 et 2, caractérisé en ce que le floculat séparé de l'eau, ayant une teneur réduite en eau, est mélangé à de la chaux vive, et que les hydrocarbures qui se sont évaporés sous l'effet de la réaction exothermique sont récupérés par condensation.

4. Procédé selon les revendications 1 et 2, caractérisé en ce que le sédiment séparé, ayant une teneur réduite en eau, est traité par des chaleurs perdues pour expulser les hydrocarbures.

**Claims**

1. Method of separating especially chlorinated hydrocarbons from water, especially from ground water, using activated carbon and sorption agents, characterized in that between 50 g and 100 g of activated carbon per m³ of water are intimately mixed with the hydrocarbons-containing water, and that after a dwell time of between 20 and 40 minutes the mixture is mixed with a separating agent which contains at least one electrolyte, a flocculating agent and as a further sorption agent bentonite and/or activated bentonite with or without lime and that the flocculated-out substance thereupon formed by coagulation is separated from the water.

2. Method according to Claim 1, characterized in that the separating agent contains, as electrolyte, iron sulphate or aluminium sulphate and also a flocculating agent, for example polyacrylamide, and that 0.4 to 1.0 kg of the separating agent are added per m³ of water to be treated.

3. Method according to Claims 1 and 2, characterized in that the flocculated-out substance separated from the water and having reduced water content is mixed with quicklime and the hydrocarbons evaporated by exothermic reaction are recovered by condensation.

4. Method according to Claims 1 and 2, characterized in that the separated sediment, having reduced water content, is treated with waste heat in order to expel the hydrocarbons.